# EUROPÄISCHE PATENTSCHRIFT

(11) **EP 1 147 975 B1**
(45) Veröffentlichungstag und Bekanntmachung des Hinweises auf die Patenterteilung: **28.09.2005**
(21) Anmeldenummer: 01109210.3
(22) Anmeldetag: 14.04.2001
(51) Int. Cl.: B62J 31/00

(54) **Kettenschmiersystem für Motorräder**
Chain lubrication for a motorcycle
Lubrification de chaîne pour une motocyclette

(30) Priorität: 19.04.2000 DE 10019638
(43) Veröffentlichungstag der Anmeldung: 24.10.2001
(73) Patentinhaber: Wachsmann, Frank, Dipl.-Ing. (FH), 96450 Coburg (DE)
(72) Erfinder: Wachsmann, Frank, Dipl.-Ing. (FH), 96450 Coburg (DE)

(56) Entgegenhaltungen:
- EP-A- 0 534 098
- DE-A- 4 016 073
- DE-A- 19 503 861
- US-A- 5 595 262

## Beschreibung

Die Erfindung betrifft eine Vorrichtung zur Schmierung der Antriebskette eines Fahrzeugs, insbesondere eines Motorrads nach dem Oberbegriff des Hauptanspruchs.

Die teilweise oder völlig frei laufende Antriebskette eines Motorrads ist in hohem Maße Umwelteinflüssen ausgesetzt, die durch Auswaschungen des Schmiermittels oder Anhaftungen von Schmutz den Verschleiß fördern. Die Antriebskette sollte deshalb in regelmäßigen Abständen nachgeschmiert werden. Im einfachsten Fall geschieht dies durch die Aufbringung von Schmierstoffen wie Kettenöl. Der Auftrag erfolgt in der Regel aus Spraydosen oder Tropfflaschen. Unterbleibt die Schmierung über einen längeren Zeitraum, kann die Kette bleibenden Schaden nehmen. Insbesondere aus sogenannten O-Ring-Ketten können die Fettvorräte über die Dichtungen entweichen.

Eine bekannte Vorrichtung zur Schmierung der Antriebskette nach der EP 0 534 098 A1, die den Gegenstand des Oberbegriffs von Anspruch 1 offenbart, bringt insoweit eine Verbesserung mit sich, als die das Schmiermittel aufnehmende Spraydose am Fahrzeug mitgeführt wird. Das Behälterventil ist ständig geöffnet, so dass das Schmiermittel bei Öffnen eines Abgabeventils aus einer Abgabeöffnung austritt und auf die Antriebskette übertragen wird. Das Abgabeventil ist normalerweise geschlossen und wird über ein Betätigungsorgan für die Dauer der Schmierung geöffnet. Ein Nachteil dieser Vorrichtung besteht darin, dass die Schmierung der Antriebskette grundsätzlich möglich ist, jedoch durch eine bewusste Aktion des Fahrers ausgelöst werden muss. Die Erfahrung hat gezeigt, dass nicht automatisierte Abläufe vom Fahrer sehr oft vergessen werden. Bei herkömmlichen Spraydosen ist ein Verklemmen des Sprühkopfes nicht auszuschließen. Ebenfalls können bei diesem System Undichtigkeiten zum schnellen Entweichen des Schmiermittels führen, da dies unter Druck steht.

Einfache Ausführungen zur Schmierung einer Antriebskette unter Verwendung von Spraydosen sind aus der US-A 4 120 380 und der DE 40 16 073 A1 bekannt geworden. Auch hier ist davon auszugehen, dass die Betätigung des Handhebels bzw. Sprühkopfes vergessen wird und eine Schmierung der Antriebskette unterbleibt.

Die DE 195 03 861 C2 offenbart ferner ein Verfahren zur dosierten Schmierung einer Antriebskette eines Motorrades. Durch mess- und steuerungstechnische Maßnahmen wird dafür gesorgt, dass das Kettenrad in Bezug auf das dosiert aufgegebene Schmiermittel abschleuderfrei arbeitet. Wie eine nach diesem Verfahren arbeitende Vorrichtung praktisch zu realisieren ist, wird nicht angegeben.

Schließlich sind noch Vorrichtungen zur Schmierung einer Antriebskette auf dem Gebiet des Sondermaschinenbaus bekannt geworden. So zeigt die US-A 3 707 203 ein Schmiersystem für eine Vorrichtung, die intermittierend betrieben wird. Hierbei kann es sich beispielsweise um eine Formmaschine oder ein Walzwerk handeln. Bei der DE 35 23 254 A1 handelt es sich um eine Vorrichtung zum Schmieren einer Warenbahn-Transportkette in einer Spannmaschine. Die letztgenannten Vorrichtungen sind für den Einsatz bei relativ großen Sondermaschinen bestimmt und bauen daher entsprechend aufwendig. Diese Lösungen sind für die Schmierung der Antriebskette eines Motorrads nicht bestimmt und geeignet.

Der vorliegenden Erfindung liegt, ausgehend vom Stand der Technik nach der EP 0 534 098, die Aufgabe zugrunde, eine Vorrichtung zur Schmierung der Antriebskette insbesondere eines Motorrads zu schaffen, die ohne großen Adaptionsaufwand bei jedem Motorradtyp einsetzbar ist und bei der die Antriebskette immer geschmiert wird, obgleich der Fahrer in der Lage sein soll, die Schmiermittelmenge den jeweiligen Verhältnissen optimal anzupassen.

Die der Erfindung zugrundeliegende Aufgabe wird mit einer Vorrichtung zur Schmierung der Antriebskette eines Fahrzeugs gelöst, die zusätzlich zu den Merkmalen des Oberbegriffs auch die Merkmale des kennzeichnenden Teils des Hauptanspruchs aufweist.

Vorteilhafte Weiterbildungen der erfindungsgemäßen Vorrichtung sind den Unteransprüchen 2 bis 4 zu entnehmen.

Weitere, für die Erfindung wesentlichen Merkmale sowie die daraus resultierenden Vorteile sind der nachfolgenden Beschreibung eines Ausführungsbeispiels zu entnehmen. Hierbei zeigen:
- Figur 1:: eine schematische, stark vereinfachte Ansicht auf den hinteren Teil eines Motorrads;
- Figur 2:: ein vereinfachtes Blockschaltbild der Elektronik mit den Ein- und Ausgangssignalen und
- Figur 3:: eine Auswerteschaltung in vereinfachter Darstellung.

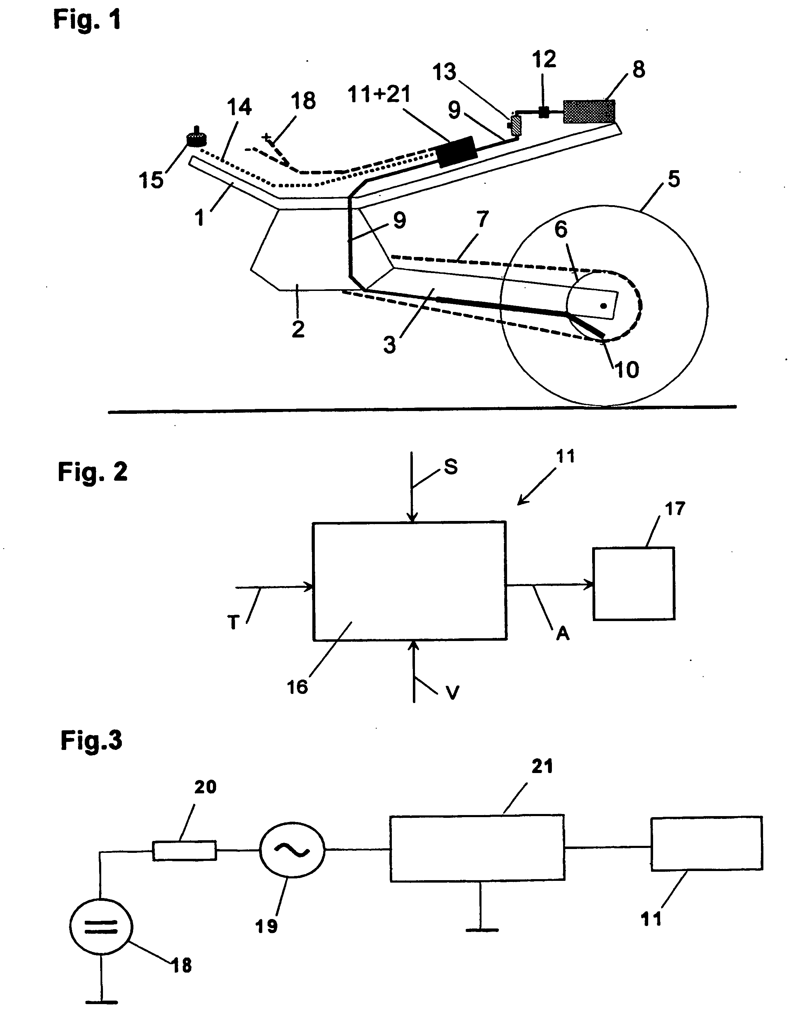

In Figur 1 ist schematisch der hintere Teil eines selbst nicht dargestellten Motorrads abgebildet. Hierbei sind Teile des Rahmens 1, des Motors und Getriebes 2, sowie einer Schwinge 3 mit dem darin befestigten Hinterrad 5 schematisch angedeutet. Ein Kettenrad 6 wird in herkömmlicher Weise über eine Antriebskette 7 von einem nicht dargestellten Kettenritzel des Getriebes angetrieben.

Im rückwärtigen, oberen Bereich des Rahmens 1 befindet sich ein Vorratsbehälter 8 für Schmiermittel. Vom Vorratsbehälter 8 führt eine Leitung 9, die am Rahmen 1 und an der Schwinge 3 verlegt ist, in die Nähe des Kettenrades 6 und endet dort in einer Abgabeöffnung 10.

Die Leitung 9 führt in einem ersten Abschnitt zu einer Steuereinheit 11, die ein selbst nicht dargestelltes elektrisch schaltbares Ventil 17 (vgl. Fig. 2) enthält. In diesem ersten Abschnitt befindet sich ferner ein Ölfilter 12 und ein passives, mechanisches Reduzierstück 13.
Mit diesem Reduzierstück 13 lässt sich eine Grundabstimmung vornehmen, indem der freie Leitungsquerschnitt der Leitung 9 auch in Abhängigkeit des Höhenunterschiedes vom Vorratsbehälter 8 bezüglich des Austrittspunktes 10 bei der Montage des Schmiersystems einmalig einzustellen ist.
Im weiteren Abschnitt der Leitung 9 führt diese vom elektrisch schaltbaren Ventil 17 bis zur Abgabeöffnung 10.

Die Ansteuerzeiten des elektrisch schaltbaren Ventils 17 können während des Betriebs vom Fahrer des Motorrads zusätzlich beeinflusst werden. Hierzu führt von der Steuereinheit 11 eine elektrische Leitung 14 zu einem Stellelement 15, das vorzugsweise in einem Verkleidungsteil oder allgemein an einem auch während der Fahrt erreichbaren Ort angebracht ist.

Über dieses Stellelement kann - zusätzlich zur vorgenommenen Grundeinstellung - die Menge des fließenden Schmiermittels manuell eingestellt werden. Hierzu ist das Stellelement 15 beispielsweise als geschalteter Spannungsteiler oder Potentiometer ausgebildet. Mit Hilfe dieses Stellelements können die An- und Abschaltzeiten des elektrisch schaltbaren Ventils variiert werden. Vorzugsweise wird ein Ventil eingesetzt, das in einer Stellung vollständig geschlossen und in der anderen Stellung bis auf den Nennquerschnitt geöffnet ist. Die Verwendung eines Proportionalventils zur Steuerung der Schmiermittelmenge ist ebenso möglich. In diesem Fall wird durch die Ansteuerung des Ventils 17 der wirksame Öffnungsquerschnitt variiert.

Das Stellelement 15 kann auch so ausgeführt sein, dass der Leitungsquerschnitt direkt beeinflusst wird, so dass in diesem Fall der effektive Leitungsquerschnitt rein mechanisch angepasst werden kann.

Über das Stellglied kann entweder direkt (mechanische Anpassung) oder indirekt (über die Variation der An- und Abschaltzeiten des elektrisch schaltbaren Ventils) eine definierte Schmiermittelmenge angewählt werden. Da das Stellelement 15 auch während der Fahrt gut zugänglich ist, kann unter Beachtung des Verkehrsgeschehens auch während des Betriebs eine manuelle Veränderung der Schmiermittelmenge vorgenommen werden. Dies ist insbesondere angebracht, wenn nach einer Auswaschung der Antriebskette durch Fahrten im Regen die Schmierung für kurze Zeit verstärkt werden muss.

Der Einfluss von mehr oder weniger stark abweichenden Umgebungstemperaturen für eine gleichmäßige Schmierung der Antriebskette ist erheblich. Bei gleichen Einstellungen der Vorrichtung würde bei tiefen Temperaturen eine viskositätsbezogene Reduzierung der Schmiermittelmenge erfolgen. Analog hierzu würde sich die Schmiermittelmenge bei erhöhter Temperatur vergrößern, bezogen beispielsweise auf eine normale Betriebstemperatur von 20° C. Eine Unterversorgung der Antriebskette mit zu wenig Schmiermittel bei tieferen Temperaturen als der normalen Betriebstemperatur würde zu erhöhtem Verschleiß führen. Umgekehrt würde bei höherer Temperatur zu viel Schmiermittel aufgebracht werden, was zu einer stärkeren Verschmutzung des Fahrzeugs führt und zudem die Umwelt unnötig belastet.

Eine viskositätsabhängige Einstellung der angewählten Schmiermittelmenge ist durch die Erfassung der Umgebungstemperatur möglich.

Die Figur 2 zeigt stark vereinfacht ein Blockschaltbild der Steuereinrichtung 11. Kernstück dieser Steuereinheit ist ein Rechner in Form eines Mikroprozessors 16, der elektrische Eingangssignale in ein Ausgangssignal zur Ansteuerung des elektrisch schaltbaren Ventils 17 verarbeitet. Dem Mikroprozessor 16 wird ein Eingangssignal für die Umgebungstemperatur T zugeführt. Ebenso liegt ein Eingangssignal für die über das Stellelement 15 angewählte Schmiermittelmenge S an. Das Ausgangssignal A zur Ansteuerung des Ventils 17 berücksichtigt die Umbebungstemperatur, sowie die Position des Stellelements 15 und führt dazu, dass die An- und Abschaltzeiten des Ventils 17 in Abhängigkeit dieser Parameter variiert werden. Das Ergebnis ist eine quasi kontinuierliche Versorgung der Antriebskette mit Schmiermittel.

Es ist möglich, zusätzlich die Geschwindigkeit des Fahrzeugs zu berücksichtigen. Hierzu wird dem Mikroprozessor ein Geschwindigkeitssignal V mitgeteilt. Die Information über die Geschwindigkeit des Motorrads kann beispielsweise durch einen Sensor, der die Drehzahl eines der Räder erfasst, eingeholt werden. Dieser Sensor kann beispielsweise optisch oder magnetisch wirken. Bei Motorrädern der neueren Generation kommen zur Ermittlung der Geschwindigkeit elektronische Tachometer zum Einsatz. Zweckmäßigerweise können die für den elektronischen Tachometer ohnehin vorliegenden Daten auch für die geschwindigkeitsabhängige Steuerung der Schmiermittelmenge verwendet werden. Das gleiche gilt bei Einsatz eines ABS.

Ein wesentliches Merkmal der erfindungsgemäßen Lösung besteht darin, dass die Antriebskette immer dann geschmiert werden soll, wenn der Motor läuft. Mit anderen Worten soll die Elektronik nur dann aktiv sein, wenn der Motor läuft.

Zur Aktivierung der Elektronik ist eine Auswerteschaltung vorgesehen, wie sie prinzipiell in Figur 3 dargestellt ist.

Die Steuereinheit 11 ist an die Fahrzeugbatterie 18 angeschlossen. Diese liefert eine Gleichspannung. Bei laufendem Motor wird der Generator (Lichtmaschine) des Fahrzeugs angetrieben. Der Innenwiderstand des Bordnetzes ist mit dem Widerstand 20 gekennzeichnet.

Während der Motor läuft, überlagert sich ein Welchselspannungsanteil der Gleichspannung der Batterie. Dies ist möglich durch einen größeren Innenwiderstand der Batterie bei höheren Frequenzen. Der Wechselspannunganteil rührt von Verbrauchern mit zeitlich nichtlinearer Stromaufnahme wie Zündung, Einspritzanlage oder auch des Ladestromes der Lichtmaschine.Der Wechselspannungsanteil wird durch einen Vergleicher 21 ausgewertet und es wird ein Signal an die Steuereinheit 11 gemeldet, sofern ein Wechselspannungsanteil festgestellt wird.

Der Vorteil dieses Anschaltungsprinzips ist, dass die gesamte Vorrichtung zur Schmierung der Antriebskette mit ihrer Steuereinheit 11 lediglich mit der Bordspannung, insbesondere der Batterie des Fahrzeugs verbunden werden muss. Ein Eingriff in die Elektronik des Fahrzeugs und insbesondere in den Kabelbaum ist nicht erforderlich. Hierdurch wird der Einbau in unterschiedliche Motorräder wesentlich vereinfacht. Eine Nachrüstung von Motorrädern mit der erfindungsgemäßen Vorrichtung ist jederzeit problemlos möglich.

## Patentansprüche

1. Vorrichtung zur Schmierung der Antriebskette (7) eines Fahrzeugs, insbesondere eines Motorrads, bei der in einem Vorratsbehälter (8) befindliches Schmiermittel über eine Leitung (9) und ein über ein Betätigungsorgan (15) zeitweise zu öffnendes, elektrisch schaltbares Ventil (17) an eine Abgabeöffnung (10) zum Auftrag auf die Antriebskette (7) gefördert wird, **dadurch gekennzeichnet, dass** die Schmiermittelmenge durch eine elektronische Schaltung (11) in Abhängigkeit von der Stellung des Betätigungsorgans (15) und bei laufendem Motor bestimmt wird, wobei durch das Betätigungsorgan (15) die möglichen An- und Abschaltzeiten des Ventils (17), bezogen auf einen bestimmten Zeitraum, variabel vorwählbar sind und die Bedingung laufender Motor erfüllt ist, wenn durch Auswertung der anliegenden Bordspannung ein der Gleichspannung überlagerter Wechselspannungsanteil festgestellt wird.

2. Vorrichtung nach Anspruch 1, **dadurch gekennzeichnet, dass** die Bestimmung der Schmiermittelmenge ferner in Abhängigkeit von der Außentemperatur (T) erfolgt.

3. Vorrichtung nach Anspruch 1, **dadurch gekennzeichnet, dass** in der Leitung (9) ein passives mechanisches Reduzierstück (13) angeordnet ist.

4. Vorrichtung nach den Ansprüchen 1 bis 3, **dadurch gekennzeichnet, dass** die Bestimmung der Schmiermittelmenge ferner in Abhängigkeit von der Geschwindigkeit (V) des Motorrads erfolgt.

## Claims

1. The invention relates to a system for lubricating the drive chain (7) of a vehicle, especially of a motorcycle, with lubricating material being supplied from a reservoir (8) via a line (9) and an electrically controlled valve (17), which is temporarily opened by means of an operating element (15), to a discharge opening (10) for application to the drive chain (7), **characterized in that** the amount of lubricant is determined by an electronic control (11) depending on the position of the operating element (15) and with the engine running, with the potential on-times and off-times of the valve (17), relative to a certain period, being variably preselectable by means of the operating element (15) and with the running-engine condition being fulfilled if evaluation of the on-board voltage reveals an AC voltage proportion being superimposed on the DC voltage.

2. A system according to claim 1, **characterized in that** the amount of lubricant is also determined by the ambient temperature (T).

3. A system according to claim 1, **characterized in that** a passive mechanical restrictor (13) is arranged in the line (9).

4. A system according to the claims 1 through 3, **characterized in that** the amount of lubricant is also determined by the speed (V) of the motorcycle.

## Revendications

1. Dispositif de graissage de la chaîne d'entraînement (7) d'un véhicule, en particulier d'une motocyclette, dans lequel un lubrifiant se trouvant dans un réservoir (8) est refoulé à travers une conduite (9) et à l'aide d'une soupape à commande électrique (17), celle-ci pouvant être ouverte temporairement par un organe de commande (15), à un orifice de distribution (10) permettant son application sur la chaîne d'entraînement (7), **caractérisé en ce que** la quantité de lubrifiant est déterminée par un circuit électronique (11) en fonction de la position de l'organe de commande (15) le moteur étant en marche, et sachant que par l'intermédiaire de l'organe de commande (15) les temps d'ouverture et de fermeture possibles de la soupape (17) pourront être présélectionnés de façon variable par rapport à une période déterminée, et **en ce que** la condition « moteur en marche » est remplie, si par évaluation de la tension de bord existante est constatée une composante alternative superposée à la tension continue.

2. Dispositif selon la revendication 1, **caractérisé en ce que**, la détermination de la quantité de lubrifiant est réalisée, en outre, en fonction de la température extérieure (T).

3. Dispositif selon la revendication 1, **caractérisé en ce que** dans la conduite (9) est disposé un raccord réducteur mécanique et passif (13).

4. Dispositif selon les revendications 1 à 3, **caractérisé en ce que** la détermination de la quantité de lubrifiant est effectuée, en outre, en fonction de la vitesse (V) de la motocyclette.
